# EUROPÄISCHE PATENTSCHRIFT

(11) **EP 4 085 504 B1**
(45) Veröffentlichungstag und Bekanntmachung des Hinweises auf die Patenterteilung: **28.02.2024**
(21) Anmeldenummer: 21701917.3
(22) Anmeldetag: 14.01.2021
(51) Int. Cl.: H02J 3/46

(54) **ENERGIEMANAGEMENTVERFAHREN SOWIE ENERGIEMANAGEMENTSYSTEM**
ENERGY MANAGEMENT METHOD AND ENERGY MANAGEMENT SYSTEM
PROCÉDÉ DE GESTION D'ÉNERGIE ET SYSTÈME DE GESTION D'ÉNERGIE

(30) Priorität: 17.03.2020 DE 102020203407
(43) Veröffentlichungstag der Anmeldung: 09.11.2022
(73) Patentinhaber: Siemens Aktiengesellschaft, 80333 München (DE)
(72) Erfinder: BAUMGÄRTNER, Thomas, 91056 Erlangen (DE); THIEM, Sebastian, 91413 Neustadt an der Aisch (DE); WAGNER, Lisa, 90768 Fürth (DE)
(74) Vertreter: Siemens Patent Attorneys
(86) Internationale Anmeldenummer: PCT/EP2021/050620
(87) Internationale Veröffentlichungsnummer: WO 2021/185484

(56) Entgegenhaltungen:
- JP-A- 2018 205 871
- JP-A- 2018 207 590
- US-A1- 2013 184 882

## Beschreibung

Die Erfindung betrifft ein Energiemanagementverfahren gemäß dem Oberbegriff des Patentanspruches 1 sowie ein Energiemanagementsystem gemäß dem Oberbegriff des Patentanspruches 11.

Energiemanagementverfahren werden für einen vorausschauenden und möglichst effizienten Betrieb von Energiesystemen verwendet. Hierbei steuert beziehungsweise regelt ein Energiemanagement typischerweise Anlagen des Energiesystems entsprechend einer vorab berechneten Leistungsvorhersage.

Insbesondere ermöglicht ein Energiemanagement, das heißt ein Energiemanagementverfahren beziehungsweise ein Energiemanagementsystem, eine vorteilhafte Einbindung des zugehörigen Energiesystems in einen lokalen Energiemarkt.

Durch einen lokalen Energiemarkt können Energiesysteme lokal gewonnene Energie, insbesondere elektrische Energie (Strom), untereinander austauschen und handeln. Hierbei ermöglicht es der lokale Energiemarkt durch seine dezentrale technische Ausgestaltung die lokal gewonnene Energie effizient mit dem lokalen Energieverbrauch abzustimmen. Somit ist ein lokaler Energiemarkt besonders im Hinblick auf erneuerbare Energien, die typischerweise lokal gewonnen werden, vorteilhaft. Grundsätzlich können hierbei die Energiesysteme in Energieverbraucher (Verbraucher), in Energiewandler und in Prosumer, die Energie sowohl verbrauchen als auch bereitstellen beziehungsweise gewinnen können, kategorisiert werden. Hierbei können Energiewandler umgangssprachlich als Energieerzeuger (Erzeuger) bezeichnet werden, wobei sich der Begriff der Erzeugung auf die bereitgestellte Energieform, beispielsweise Strom bei Stromerzeugern, bezieht.

Technisch wird ein lokaler Energiemarkt durch eine Steuerungsplattform, die ebenfalls als Energiemarktplattform bezeichnet werden kann, verwirklicht. Hierbei koordiniert beziehungsweise steuert die Steuerungsplattform die Energieaustausche zwischen den Energiesystemen basierend auf Angebote, die die Energiesysteme vorab an die Steuerungsplattform übermitteln. Diese Angebote, die technische Daten bezüglich des Energiesystems beziehungsweise seiner Anlagen umfassen, können durch das Energiemanagementsystem ermittelt und an den lokalen Energiemarkt übermittelt werden.

Ein solcher lokaler Energiemarkt ist beispielsweise aus dem Dokument EP 3518369 A1 bekannt.

JP2018 207590 A stellt den nächsten Stand der Technik bezüglich der Erfindung dar.

Bekannte Energiemanagementsysteme übermitteln lediglich bezüglich eines Netzanschlusses des Energiesystems aggregierte Angebote an den lokalen Energiemarkt. Hierdurch kann nicht die gesamte Flexibilität, beispielsweise in Form von Energiespeichern, durch den lokalen Energiemarkt genutzt werden.

Der vorliegenden Erfindung liegt die Aufgabe zugrunde, ein Energiemanagement bereitzustellen, welches eine verbesserte Ausnutzung von Energiespeichern eines Energiesystems ermöglicht.

Die Aufgabe wird durch ein Energiemanagementverfahren mit den Merkmalen des unabhängigen Patentanspruches 1 sowie durch ein Energiemanagementsystem mit den Merkmalen des unabhängigen Patentanspruches 8 gelöst. In den abhängigen Patentansprüchen sind vorteilhafte Ausgestaltungen und Weiterbildungen der Erfindung angegeben.

Bei dem erfindungsgemäßen Energiemanagementverfahren für ein Energiesystem wird eine Leistungsvorhersage, insbesondere eine Lastvorhersage, für eine Verwendung eines Energiespeichers des Energiesystems für wenigstens einen Zeitbereich berechnet. Das erfindungsgemäße Verfahren ermittelt basierend auf der berechneten Leistungsvorhersage wenigstens eine extern verwendbare Teilspeicherkapazität des Energiespeichers, die gemäß der Leistungsvorhersage nicht von dem Energiesystem innerhalb des Zeitbereichs verwendet wird, wobei die ermittelte Teilspeicherkapazität für eine bezüglich des Energiesystems externe Verwendung bereitgestellt wird.

Vorliegend umfasst der Begriff des Steuerns ein Regeln.

Energiesysteme umfassen typischerweise mehrere Komponenten, insbesondere energietechnische Anlagen, beispielsweise Energiewandlungsanlagen, Verbrauchsanlagen und/oder Speicheranlagen. Insbesondere ist das Energiesystem ein multimodales Energiesystem. Multimodale Energiesysteme sind Energiesysteme, die mehrere Energieformen erzeugen und/oder bereitstellen. Insbesondere stellt ein multimodales Energiesystem für einen Energieverbraucher, beispielsweise ein Gebäude, eine Industrieanlage oder private Anlagen, eine oder mehrere Energieformen bereit, wobei die Bereitstellung insbesondere durch eine Umwandlung verschiedener Energieformen, durch einen Transport verschiedener Energieformen und/oder durch gespeicherte Energieformen erfolgt. Mit anderen Worten werden die verschiedenen Energieformen, beispielsweise Wärme, Kälte oder elektrische Energie, mittels des multimodalen Energiesystems bezüglich ihrer Erzeugung, ihrer Bereitstellung und/oder ihrer Speicherung gekoppelt.

Als Anlagen kann das Energiesystem eine oder mehrere der folgenden Komponenten umfassen: Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Biomasseanlagen, Biogasanlagen, Müllverbrennungsanlagen, industrielle Anlagen, konventionelle Kraftwerke und/oder dergleichen.

Das Energiemanagementverfahren gemäß der vorliegenden Erfindung und/oder einer ihrer Ausgestaltungen und/oder eine oder mehrere Funktionen, Merkmale und/oder Schritte des Verfahrens beziehungsweise seiner Ausgestaltungen können wenigstens teilweise oder vollständig computergestützt sein.

Gemäß der vorliegenden Erfindung wird wenigstens ein Teil der (Gesamt)Speicherkapazität des Energiespeichers für eine externe Verwendung freigegeben beziehungsweise bereitgestellt. Hierbei wird ermittelt, welcher Anteil der Speicherkapazität des Energiespeichers durch das Energiesystem verwendet wird und welcher Anteil innerhalb des Zeitbereiches nicht verwendet wird. Der nicht verwendete Anteil wird für eine externe Verwendung bereitgestellt, insbesondere energiesystemextern verwendet. Dadurch wird vorteilhafterweise der Betrieb des Energiesystems möglichst wenig gestört beziehungsweise beeinflusst und verbleibende Speicherkapazitäten des Energiespeichers können vorteilhafterweise extern, beispielsweise durch bezüglich des Energiesystems externe Energiesysteme, verwendet und somit genutzt werden. Mit anderen Worten werden der Energiespeicher und die Flexibilität, die dieser bereitstellt, verbessert nutzbar.

Zur Bestimmung der Teilspeicherkapazität, das heißt zur Bestimmung des Anteils der Speicherkapazität des Energiespeichers, die extern bereitgestellt wird beziehungsweise bereitstellbar ist, wird eine Leistungsvorhersage des Energiespeichers durch ein erfindungsgemäßes Energiemanagementsystem durchgeführt. Die Leistungsvorhersage kennzeichnet wenigstens innerhalb des Zeitbereiches oder innerhalb eines weiteren, typischerweise längeren Zeitbereiches, den zeitlichen Verlauf der Ladeleistung oder Entladeleistung, die am Energiespeicher anliegt. Gemäß der Leistungsvorhersage, die beispielsweise für einen kommenden Tag, insbesondere für den nächsten Tag, vorliegt, kann für einen oder mehrere Zeitbereiche ermittelt werden, in welchem Umfang der Energiespeicher durch das Energiesystem verwendet wird, das heißt beladen oder entladen wird. Soll beispielsweise ausgehend von einem initialen Ladezustand des Energiespeichers dieser bis zu einem bestimmten Ladezustand beladen werden, so kann die bis zum maximalen Ladezustand verbleibende Speicherkapazität für ein externes Beladen verwendet werden. Alternativ oder ergänzend kann die bereits vorhandene Speicherkapazität extern entladen werden. Insbesondere wird der Energiespeicher innerhalb des Zeitbereiches nicht durch das Energiesystem verwendet. Vorteilhafterweise kann dadurch die gesamte Speicherkapazität des Energiespeichers extern für den genannten Zeitbereich bereitgestellt werden beziehungsweise extern verwendet werden. Dies ist beispielsweise für einen Energiespeicher mit einer angebundenen Photovoltaikanlage der Fall, da hierbei der Energiespeicher typischerweise in den Morgenstunden beladen und in den Abendstunden entladen wird. Zwischenzeitlich, das heißt innerhalb des Zeitbereiches, wird die Speicherkapazität des Energiespeichers extern bereitgestellt.

Die vorliegende Erfindung ermöglicht somit eine größtmögliche Verwendung des Energiespeichers durch eine energiesysteminterne sowie energiesystemexterne Verwendung. Sinnbildlich wird hierzu der Energiespeicher virtuell in eine durch das Energiesystem genutzte und eine extern genutzte Speicherkapazität (Teilspeicherkapazität) aufgeteilt.

Eine alternative Lösung zum oben genannten Problem ist, den Energiespeicher für den Zeitbereich innerhalb des Energiemanagementverfahrens und somit bei dem Berechnen des Lastprofils nicht zu berücksichtigen. Somit könnte ebenfalls die gesamte Speicherkapazität extern verwendet werden. Dadurch würde das Beladen und/oder Entladen des Energiespeichers quasi von extern gesteuert beziehungsweise geregelt. Dies würde jedoch die betriebliche Effizienz des Energiesystems und somit des Energiemanagementverfahrens typischerweise verschlechtern. Beispielsweise wäre dies dann der Fall, wenn durch ein Beladen des Energiespeichers eine maximale zulässige, typischerweise monatlich zulässige, Spitzenleistung des Energiesystems überschritten werden würde, da dann ein erhöhter Leistungspreis anfällt.

Das erfindungsgemäße Energiemanagementsystem für ein Energiesystem ist dazu ausgestaltet, eine Leistungsvorhersage für eine Verwendung eines Energiespeichers des Energiesystems für einen Zeitbereich zu berechnen. Das erfindungsgemäße Energiemanagementsystem ermittelt basierend auf der berechneten Leistungsvorhersage wenigstens eine extern verwendbare Teilspeicherkapazität des Energiespeichers, die gemäß der Leistungsvorhersage nicht von dem Energiesystem innerhalb des Zeitbereichs verwendet wird, und die ermittelte Teilspeicherkapazität für eine bezüglich des Energiesystems externe Verwendung bereitzustellen.

Besonders bevorzugt ist das Energiemanagementsystem dazu ausgestaltet, Informationen beziehungsweise zugehörige Datensätze mit einer lokalen Energiemarktplattform auszutauschen, das heißt Informationen beziehungsweise Datensätze an die lokale Energiemarktplattform zu übermitteln und/oder von der Energiemarktplattform zu empfangen und/oder zu verarbeiten. Insbesondere ist das Energiemanagementsystem zur Steuerung beziehungsweise Regelung von Anlagen des Energiesystems, insbesondere des Energiespeichers, basierend auf von der Energiemarktplattform empfangenen Informationen beziehungsweise Datensätzen ausgebildet.

Es ergeben sich zum erfindungsgemäßen Energiemanagementverfahren gleichartige und/oder gleichwertige Vorteile und/oder Ausgestaltungen.

Ein erfindungsgemäßer lokaler Energiemarkt umfasst wenigstens ein Energiesystem mit einem erfindungsgemäßen Energiemanagementsystem.

Gemäß der Erfindung umfasst die Teilspeicherkapazität eine Ladespeicherkapazität **SOC₊** und eine Entladespeicherkapazität **SOC_,** wobei die Ladespeicherkapazität **SOC₊** für ein externes Beladen des Energiespeichers verwendet wird, und die Entladespeicherkapazität **SOC_** für ein externes Entladen des Energiespeichers verwendet wird.

Dadurch kann vorteilhafterweise der Zeitbereich der externen Verwendung (Zeitbereich) des Energiespeichers verlängert werden. Weiterhin werden eine externe Beladung sowie eine externe Entladung des Energiespeichers ermöglicht.

In einer vorteilhaften Weiterbildung der Erfindung werden die Ladespeicherkapazität **SOC₊** und die Entladespeicherkapazität **SOC_** in Abhängigkeit des bezüglich des Zeitbereiches initialen Ladezustandes des Energiespeichers festgelegt.

Dadurch wird vorteilhafterweise das Berechnen der Teilspeicherkapazität, die für eine externe Verwendung vorgesehen ist, verbessert.

Gemäß der Erfindung erfolgt die externe Verwendung des Energiespeichers derart, dass der bezüglich des Zeitbereiches finale Ladezustand des Energiespeichers gleich dem bezüglich des Zeitbereiches initialen Ladezustandes ist.

Mit anderen Worten wird ebenfalls hierbei die Ladespeicherkapazität in Abhängigkeit des initialen und finalen Ladezustandes festgelegt. Dadurch wird die externe Verwendung des Energiespeichers weiter verbessert und optimiert, ohne den energiesysteminternen Betrieb des Energiespeichers zu stören.

Gemäß einer vorteilhaften Ausgestaltung der Erfindung erfolgt die externe Verwendung des Energiespeichers derart, dass der Ladezustand innerhalb des Zeitbereiches entweder unterhalb oder oberhalb des bezüglich des Zeitbereiches initialen und finalen Ladezustandes ist.

Dies ist besonders vorteilhaft, da dadurch ein Betreiber des Energiespeichers keinen Nachteil, insbesondere keinen Kostennachteil, durch die externe Verwendung hat.

Gemäß der Erfindung wird die Ladespeicherkapazität **SOC₊** durch **SOC₊ = 1-SOCₘₐₓ** ermittelt, wobei **SOCₘₐₓ** den maximalen Ladezustand des Energiespeichers innerhalb des Zeitbereiches kennzeichnet, und/oder die Entladespeicherkapazität **SOC_** durch **SOC_ = 1 - SOCₘᵢₙ** ermittelt, wobei **SOCₘᵢₙ** den minimalen Ladezustand des Energiespeichers innerhalb des Zeitbereiches kennzeichnet.

Hierbei ist somit die Ladespeicherkapazität beziehungsweise die Entladespeicherkapazität vom initialen und/oder finalen Ladezustand abhängig. Mit anderen Worten werden die Ladespeicherkapazität und Entladespeicherkapazität relativ zum initialen Ladezustand innerhalb des Zeitbereiches ermittelt.

Gemäß einer bevorzugten Ausgestaltung der Erfindung erfolgt die externe Verwendung des Energiespeichers derart, dass eine bezüglich des Zeitbereiches maximale Zyklenzahl des Energiespeichers nicht überschritten wird.

Dadurch ist vorteilhafterweise sichergestellt, dass die maximal zulässigen Beladungen beziehungsweise Entladungen des Energiespeichers innerhalb des Zeitbereiches nicht überschritten werden. Hierbei kann die maximal zulässige Zyklenzahl vom Energiespeicher, insbesondere seiner Art, abhängig sein. Typischerweise dürfen Batteriespeicher bis zu zweimal am Tag beladen beziehungsweise entladen werden. Vorteilhafterweise stellt das Energiemanagementsystem beziehungsweise das Energiemanagementverfahren die genannte Bedingung an die Zyklenzahl sicher. Die maximale Zyklenzahl kann vorteilhafterweise an externe Energiesysteme, die beispielsweise den Energiespeicher verwenden, übermittelt werden. Insbesondere ist die Übermittlung an einen lokalen Energiemarkt vorteilhaft.

Für einen Batteriespeicher ist es aufgrund seiner Alterung vorteilhaft, seinen Ladezustand (englisch: State of Charge; abgekürzt SOC) im Bereich eines bestimmten Ladezustandes zu halten. Diese Information wird bevorzugt durch die Angebote, die an einen lokalen Energiemarkt übermittelt werden, umfasst. Dadurch können vorteilhafterweise der Zeitbereich der externen Verwendung und/oder die für die externe Verwendung vorgesehene Teilspeicherkapazität verbessert bestimmt werden.

Weiterhin führt eine Überschreitung von bestimmten Ladezuständen, beispielsweise für bestimmte Lithium-Ionen-Batteriespeichern über 60 Prozent, zu chemischen Umlagerungsprozessen in der oder den Zellen des Batteriespeichers, die eine überproportionale Alterung bedingen. Dies kann ebenfalls bei den Angeboten an den lokalen Energiemarkt berücksichtigt werden.

Mit anderen Worten ist es für einen elektrochemischen Energiespeicher, insbesondere einen Batteriespeicher, vorteilhaft, diesen - auch beim Vorliegen einer externen Verwendung - in einem festgelegten und bezüglich der Alterung vorteilhaften Ladezustandsbereich zu halten. Diese Information kann besonders bevorzugt an einen lokalen Energiemarkt, beispielsweise in Form eines jeweiligen Speicherangebotes, übermittelt und durch diesen berücksichtigt werden.

In einer vorteilhaften Ausgestaltung der Erfindung wird der Zeitbereich mittels der Leistungsvorhersage ermittelt, wobei das Ermitteln unter der Bedingung erfolgt, dass der Energiespeicher innerhalb des Zeitbereiches nicht durch das Energiesystem verwendet wird.

Mit anderen Worten wird der oder die Zeitbereiche ermittelt, in welchem der Energiespeicher gänzlich nicht durch das Energiesystem verwendet wird. Dieser ermittelte Zeitbereich kann mehrere Zeitbereiche umfassen, die zusammenhängend oder nicht zusammenhängend sein können. Beispielsweise wird ein Energiespeicher eines Wohngebäudes typischerweise am Nachmittag durch dieses nicht verwendet. Dieser Zeitbereich wird aus der Leistungsvorhersage ermittelt. Anschließend wird die vollständige Speicherkapazität des Energiespeichers für eine externe Verwendung bereitgestellt, das heißt in diesem Fall ist die Teilspeicherkapazität die gesamte Speicherkapazität des Energiespeichers.

Gemäß einer besonders bevorzugten Ausgestaltung der Erfindung wird die Teilspeicherkapazität in Form eines Speicherangebotes für die externe Verwendung durch weitere Energiesysteme an eine lokale Energiemarktplattform übermittelt.

Dadurch wird vorteilhafterweise der Energiespeicher in einen lokalen Energiemarkt, der technisch durch die lokale Energiemarktplattform ausgebildet wird, durch weitere Energiesysteme, die am lokalen Energiemarkt teilnehmen, verwendbar. Insbesondere wird dadurch die Effizienz des lokalen Energiemarktes verbessert, da lokale Energiegewinnung und lokaler Verbrauch innerhalb des lokalen Energiemarktes verbessert in Übereinstimmung gebracht werden können. Dies ist deshalb der Fall, da der Energiespeicher innerhalb des lokalen Energiemarktes eine Flexibilität bezüglich Energiegewinnung und ihrem Verbrauch ausbildet.

Weiterhin ergibt sich eine Kostenneutralität für den Betreiber des Energiespeichers. Eine Kostenneutralität für das Energiemanagement seitens des lokalen Energiemarktes muss sichergestellt sein, damit sich kein Nachteil für das den Energiespeicher umfassende Energiesystem ergibt. Beispielsweise ist ein erhöhtes Leistungsentgelt, welches durch die externe Verwendung des Energiespeichers durch den lokalen Energiemarkt entsteht vom lokalen Energiemarkt gedeckt beziehungsweise wird durch diesen übernommen. Durch die Abgabe des Speicherangebots kann zudem auf regionaler Ebene vorteilhafterweise mehr bereits vorhandene Flexibilität genutzt werden. Hierdurch verbessert sich einerseits die Ressourcennutzung. Andererseits kann die Flexibilität auch einen erhöhten Anteil erneuerbarer Energien im regionalen Energiesystem ermöglichen. Weiterhin bildet sich für das Energiemanagement beziehungsweise das Energiemanagementsystem eine zusätzliche Einnahmequelle durch die vom lokalen Energiemarkt erzielte Vergütung für die externe Verwendung des Energiespeichers. Dies kann den Ausbau von lokalen Energiespeichern, der insbesondere im Hinblick auf erneuerbare Energien technisch vorteilhaft ist, fördern.

Alternativ oder ergänzend könnte das Energiemanagement beziehungsweise das Energiemanagementsystem einen Worst-Case Preis für die externe Verwendung des Energiespeichers durch den lokalen Energiemarkt bestimmen und im jeweiligen Speicherangebot spezifizieren. Dies führt zu einer weiteren Ausgestaltung, bei welcher das Energiemanagement für den Energiespeicher mehrere Speicherangebote mit unterschiedlichen Zeiträumen und unterschiedlichen Preisen für die externe Verwendung des Energiespeichers abgibt, die sich aber gegenseitig ausschließen. Somit sollte der Energiemarkt lediglich eines der abgegebenen Speicherangebote umsetzen.

In einer vorteilhaften Weiterbildung der Erfindung wird die externe Verwendung, insbesondere bezüglich der Ladeleistung und Entladeleistung des Energiespeichers, innerhalb des Zeitbereiches durch die lokale Energiemarktplattform ermittelt und festgelegt.

Mit anderen Worten wird die externe Verwendung des Energiespeichers, basierend auf den Informationen, die vom Energiemanagementsystem an die lokale Energiemarktplattform übermittelt werden, durch den Matching-Algorithmus des lokalen Energiemarktes berücksichtigt. Die Information kann die Leistungsvorhersage oder den oder die Zeitbereiche umfassen, und/oder auf diesen basieren. Typischerweise wird die Information in Form von Angeboten an die lokale Energiemarktplattform durch das Energiemanagementsystem und/oder das Energiesystem übermittelt. Die lokale Energiemarktplattform ermittelt basierend auf den genannten übermittelten Informationen die externe Verwendung des Energiespeichers und übermittelt dies wiederum an das Energiesystem, insbesondere an das Energiemanagementsystem, beispielsweise in Form eines Preissignals. Das lokale Energiemanagementsystem steuert beziehungsweise regelt dann entsprechend die externe Verwendung des Energiespeichers, das heißt dieser wird entsprechend beladen oder entladen.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: ein Diagramm zu einer Gesamtleistungsvorhersage, Erzeugungsvorhersagen von zwei Photovoltaikanlagen und Leistungsvorhersage eines Batteriespeichers; und
- Figur 2: ein Diagramm zur Ermittlung einer für eine externe Verwendung vorgesehenen Teilspeicherkapazität eines Energiespeichers.

Gleichartige, gleichwertige oder gleichwirkende Elemente können in einer der Figuren oder in den Figuren mit denselben Bezugszeichen versehen sein.

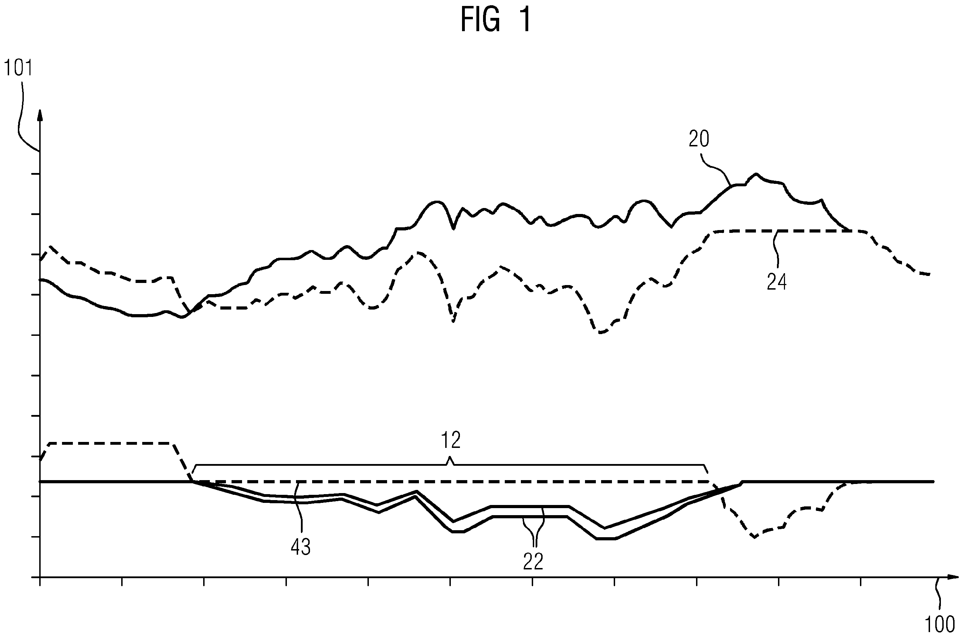

Figur 1 zeigt ein Diagramm zu einer Gesamtleistungsvorhersage 20, Erzeugungsvorhersagen 22 von zwei Photovoltaikanlagen und Leistungsvorhersage 43 eines Batteriespeichers. Das Energiesystem umfasst vorliegend wenigstens zwei Photovoltaikanlagen und einen Energiespeicher, insbesondere einen Batteriespeicher, beispielsweise einen Lithium-Ionen-Speicher, insbesondere eines Elektrofahrzeuges. Beispielsweise ist das Energiesystem ein Gebäude, insbesondere ein Wohngebäude.

An der Abszisse 100 des dargestellten Diagramms ist die Zeit, insbesondere eines Tages, in beliebigen Einheiten aufgetragen.

An der Ordinate 101 ist eine jeweilige Leistung in beliebigen Einheiten aufgetragen, beispielsweise in Watt.

Mit anderen Worten ist in Figur 1 ein Betriebsfahrplan bezüglich des Energiesystems dargestellt. Hierbei wird der Betriebsfahrplan durch ein Energiemanagementsystem gemäß der vorliegenden Erfindung und/oder einer ihrer Ausgestaltungen berechnet.

Die Kurve 20 korrespondiert zu einer durch das Energiemanagementsystem vorhergesagten Gesamtlast. Mit anderen Worten ist die Kurve 20 eine Gesamtleistungsvorhersage des Energiesystems. Die Gesamtleistungsvorhersage 20 wird ebenfalls durch das Energiemanagementsystem ermittelt beziehungsweise berechnet.

Die Kurven 22 verdeutlichen die durch das Energiemanagementsystem vorhergesagte Erzeugung durch die Photovoltaikanlagen.

Die Kurve 24 ist eine für das Energiesystem durch das Energiemanagementsystem berechnete kostenoptimale Leistungsvorhersage an einem Netzanschlusspunkt des Energiesystems.

Die Kurve 43 ist die Leistungsvorhersage bezüglich der energiesysteminternen Verwendung des Energiespeichers.

Gemäß der Leistungsvorhersage 43 für den Energiespeicher, das heißt gemäß der Leistung am Energiespeicher, insbesondere am Batteriespeicher, lässt sich erkennen, dass dieser in den Morgenstunden (von 0:00 Uhr bis 6:00 Uhr) für das Energiesystem geladen beziehungsweise beladen wird. Mit anderen Worten wird der Energiespeicher von 0:00 Uhr bis 6:00 Uhr durch das Energiesystem verwendet. Weiterhin wird der Energiespeicher am Abend von 19:00 Uhr bis 23:00 Uhr durch das Energiesystem verwendet, vorliegend durch dieses Entladen. Im Zeitbereich 12 von 6:00 Uhr bis 19:00 Uhr wird gemäß der berechneten Lastenvorhersage 43, das heißt gemäß dem Betriebsfahrplan oder der optimalen Fahrplanberechnung durch das Energiemanagementsystem der Energiespeicher nicht durch das Energiesystem verwendet. Das heißt, dass der Energiespeicher für einen möglichst optimalen Betrieb des Energiesystems im Zeitbereich 12 nicht erforderlich ist.

Gemäß einem Ausführungsbeispiel wird der Energiespeicher, insbesondere der Batteriespeicher, in den Morgenstunden voll aufgeladen (Ladezustand SOC gleich 1 beziehungsweise 100 %) und erst in den Abendstunden (ab etwa 20:00 Uhr) wieder entladen (SOC gleich 0.7). Im Zeitbereich 12 verbleibt der Ladezustand gemäß der Leistungsvorhersage 43 konstant bei 1 beziehungswiese 100 %.

Gemäß einer besonders bevorzugten Ausgestaltung der vorliegenden Erfindung wird somit der Energiespeicher für den Zeitbereich 12 innerhalb eines lokalen Energiemarktes durch weitere Energiesysteme verwendet. Hierbei steht im Zeitbereich 12 die volle Speicherkapazität des Energiespeichers für diese externe Verwendung zur Verfügung. Somit kann ein Speicherkapazitäts-Angebot für den Zeitbereich 12 von 6:00 Uhr bis 20:00 Uhr an die lokale Energiemarktplattform übermittelt werden. Ist wie vorliegend der Ladezustand des Energiespeichers im Zeitbereich 12 gleich 1, so ist zunächst ein externes Entladen des Energiespeichers erforderlich. Danach kann der Energiespeicher extern beladen werden. Hierbei sollte am Ende des Zeitbereiches 12 der Ladezustand gleich dem bezüglich der externen Verwendung vorliegenden Anfangsladezustand (initialer Ladezustand) sein, das heißt vorliegend um etwa 20:00 Uhr wiederum den Wert 1 aufweisen.

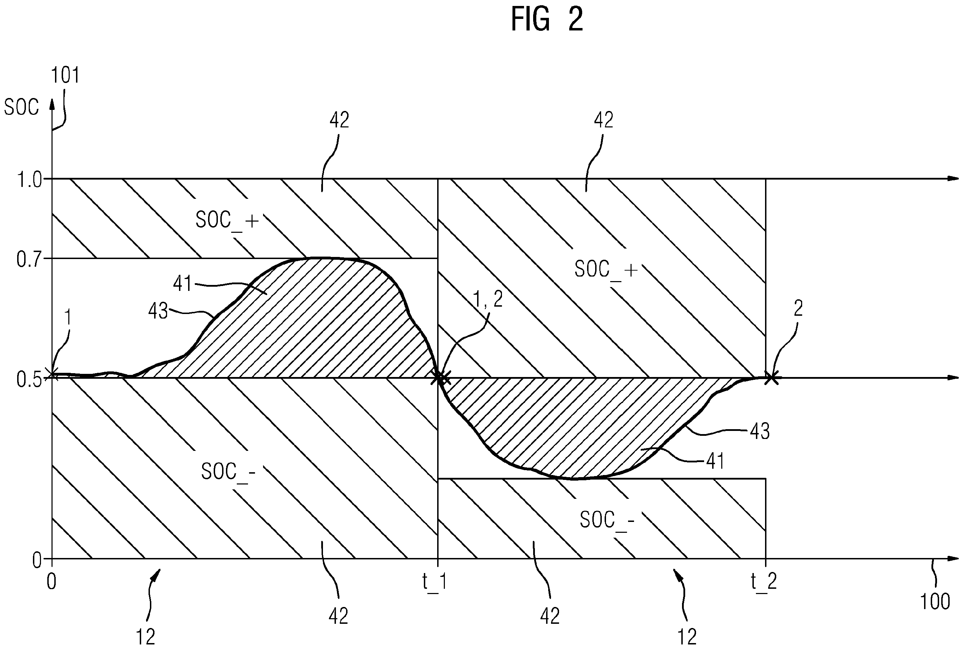

Die Figur 2 zeigt ein Diagramm zur Ermittlung einer für eine externe Verwendung vorgesehene Teilspeicherkapazität 42 eines Energiespeichers.

An der Abszisse 100 des dargestellten Diagrammes ist die Zeit, beispielsweise eines Tages, in beliebigen Einheiten aufgetragen.

An der Ordinate 101 ist der Ladezustand SOC des Energiespeichers aufgetragen. Der Ladezustand ist dimensionslos, wobei ein Wert von 1 (100 %) eine vollständige Beladung des Energiespeichers und ein Wert von 0 (0 %) eine vollständige Entladung des Energiespeichers kennzeichnet. Hierbei korrespondiert die betragsmäßige Differenz zweier Ladezustände zu einer Speicherkapazität.

Im vorliegenden Ausführungsbeispiel werden die Teilkapazitäten 42 für die externe Verwendung durch einen lokalen Energiemarkt bereitgestellt. Dargestellt sind zwei Zeitbereiche 42, die zeitlich aufeinander folgen und in welchen der Energiespeicher grundsätzlich für eine externe Verwendung vorgesehen ist.

Zu Beginn eines ersten der zwei Zeitbereiche 12 weist der Energiespeicher beispielsweise einen initialen Ladezustand 1 von 0.5 (50 %) auf. Hierbei ist es erforderlich, dass der finale Ladezustand 2 des Energiespeichers am Ende des ersten Zeitbereiches 12 ebenfalls den Wert 0.5 (50 %) aufweist. Mit anderen Worten sind bezüglich des ersten Zeitbereiches 12 und bezüglich des Ladezustandes des Energiespeichers periodische Randbedingungen vorgesehen.

Gemäß einer Leistungsvorhersage 43 für die energiesysteminterne Verwendung des Energiespeichers, die durch ein Energiemanagementsystem gemäß der vorliegenden Erfindung und/oder einer ihrer Ausgestaltungen ermittelt wurde, wird der Energiespeicher im ersten Zeitbereich 12 durch das Energiesystem vom Ladezustand 0.5 auf maximal den Ladezustand 0.7 beladen. Somit können die Teilkapazitäten 42 (Ladespeicherkapazität **SOC₊** und Entladespeicherkapazität **SOC_**) extern innerhalb des ersten der Zeitbereiche 12 verwendet werden. Die Teilkapazitäten 42 sind durch die schraffierten Flächen gekennzeichnet.

Im Rahmen der Bereitstellung für einen lokalen Energiemarkt wird somit ein Speicherangebot mit dem Ladezustand 0.5 und entsprechender maximaler Lade- und Entladeleistung an den lokalen Energiemarkt für den ersten der Zeitbereiche 12 übermittelt. Die oben links schraffierte Fläche ist der relative Ladezustand zum Beladen (**SOC₊**) und die unten links schraffierte Fläche ist der relative Ladezustand zum Entladen (**SOC_**) des Energiespeichers. Hierbei bedeutet relativ, die Abhängigkeit vom initialen Ladezustand 1 des Energiespeichers innerhalb des festgelegten oder ermittelten Zeitbereiches 12. Diese genannten schraffierten Flächen können durch den lokalen Energiemarkt zum Beladen beziehungsweise Entladen des Energiespeichers verwendet werden. Die direkt unter der Leistungsvorhersage 43 schraffierte Fläche 41 beschreibt den **SOC_** Spielraum, der dem Energiemanagement beziehungsweise dem Energiemanagementsystem zum Betrieb des Energiespeichers bleibt. Für den folgenden zweiten Zeitbereich 12 kann entsprechend vorgegangen werden, wobei hierbei der Verlauf des Ladezustandes 43, welcher durch das Energiemanagement beziehungsweise Energiemanagementsystem berechnet wurde, unterhalb des initialen beziehungsweise finalen Ladezustandes verbleibt. Grundsätzlich kann **SOC₊** durch **SOC₊ = 1 - SOCₘₐₓ** ermittelt werden, wobei **SOCₘₐₓ** den maximalen Ladezustand des Energiespeichers innerhalb des Zeitbereiches 12 kennzeichnet, und/oder die Entladespeicherkapazität **SOC_** durch **SOC_ = 1-SOCₘᵢₙ** ermittelt werden, wobei **SOCₘᵢₙ** den minimale Ladezustand des Energiespeichers innerhalb des Zeitbereiches 12 kennzeichnet. Grundsätzlich ist hierbei somit erforderlich, dass der Ladezustand innerhalb des Zeitbereiches 12 entweder unterhalb oder oberhalb des bezüglich des Zeitbereiches 12 initialen und finalen Ladezustandes 1, 2 ist.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Initialer Ladezustand
- 2: Finaler Ladezustand
- 12: Zeitbereich
- 20: Gesamtleistungsvorhersage des Energiesystems
- 22: Erzeugungsvorhersage
- 24: Kostenoptimale Leistungsvorhersage am Netzanschlusspunkt des Energiesystems
- 41: Vom Energiesystem verwendete Speicherkapazität
- 42: Teilkapazität
- 43: Leistungsvorhersage des Energiespeichers
- 100: Abszisse
- 101: Ordinate

## Patentansprüche

1. Energiemanagementverfahren für ein Energiesystem, bei dem eine Leistungsvorhersage (43) für eine Verwendung eines Energiespeichers des Energiesystems für einen Zeitbereich (12) berechnet wird, wobei basierend auf der berechneten Leistungsvorhersage (43) wenigstens eine extern verwendbare Teilspeicherkapazität (42) des Energiespeichers ermittelt wird, die gemäß der Leistungsvorhersage (43) nicht von dem Energiesystem innerhalb des Zeitbereichs (12) verwendet wird, wobei die ermittelte Teilspeicherkapazität (42) für eine bezüglich des Energiesystems externe Verwendung bereitgestellt wird, wobei die Teilspeicherkapazität (42) eine Ladespeicherkapazität **SOC₊** und eine Entladespeicherkapazität **SOC_** umfasst, wobei die Ladespeicherkapazität **SOC₊** für ein externes Beladen des Energiespeichers verwendet wird, und die Entladespeicherkapazität **SOC_** für ein externes Entladen des Energiespeichers verwendet wird, und die Ladespeicherkapazität **SOC₊** durch **SOC₊ = 1 - SOCₘₐₓ** ermittelt wird, wobei **SOCₘₐₓ** den maximalen Ladezustand des Energiespeichers innerhalb des Zeitbereiches (12) kennzeichnet, und die Entladespeicherkapazität **SOC_** durch **SOC_ = 1 - SOCₘᵢₙ** ermittelt wird, wobei **SOCₘᵢₙ** den minimalen Ladezustand des Energiespeichers innerhalb des Zeitbereiches (12) **kennzeichnet; dadurch** gekennzeichnet, dass die externe Verwendung des Energiespeichers derart erfolgt, dass der bezüglich des Zeitbereiches (12) finale Ladezustand (2) des Energiespeichers gleich dem bezüglich des Zeitbereiches (12) initialen Ladezustandes (1) ist.

2. Energiemanagementverfahren gemäß Anspruch 1, **gekennzeichnet dadurch, dass** die Ladespeicherkapazität **SOC₊** und die Entladespeicherkapazität **SOC_** in Abhängigkeit des bezüglich des Zeitbereiches (12) initialen Ladezustandes (1) des Energiespeichers festgelegt werden.

3. Energiemanagementverfahren gemäß einem der vorhergehenden Ansprüche, **gekennzeichnet dadurch, dass** die externe Verwendung des Energiespeichers derart erfolgt, dass der Ladezustand innerhalb des Zeitbereiches (12) entweder unterhalb oder oberhalb des bezüglich des Zeitbereiches (12) initialen und finalen Ladezustandes (1, 2) ist.

4. Energiemanagementverfahren gemäß einem der vorhergehenden Ansprüche, **gekennzeichnet dadurch, dass** die externe Verwendung des Energiespeichers derart erfolgt, dass eine bezüglich des Zeitbereiches (12) maximale Zyklenzahl des Energiespeichers nicht überschritten wird.

5. Energiemanagementverfahren gemäß einem der vorhergehenden Ansprüche, **gekennzeichnet dadurch, dass** der Zeitbereich (12) mittels der Leistungsvorhersage (43) ermittelt wird, wobei das Ermitteln unter der Bedingung erfolgt, dass der Energiespeicher innerhalb des Zeitbereiches (12) nicht durch das Energiesystem verwendet wird.

6. Energiemanagementverfahren gemäß einem der vorhergehenden Ansprüche, **gekennzeichnet dadurch, dass** die Teilspeicherkapazität (42) in Form eines Speicherangebotes für die externe Verwendung durch weitere Energiesysteme an eine lokale Energiemarktplattform übermittelt wird.

7. Energiemanagementverfahren gemäß Anspruch 6, **gekennzeichnet dadurch, dass** die externe Verwendung, insbesondere bezüglich der Ladeleistung und Entladeleistung des Energiespeichers, innerhalb des Zeitbereiches (12) durch die lokale Energiemarktplattform ermittelt und festgelegt wird.

8. Energiemanagementsystem für ein Energiesystem, welches dazu ausgestaltet ist, eine Leistungsvorhersage (43) für eine Verwendung eines Energiespeichers des Energiesystems für einen Zeitbereich (12) zu berechnen, wobei das Energiemanagementsystem dazu ausgebildet ist, basierend auf der berechneten Leistungsvorhersage (43) wenigstens eine extern verwendbare Teilspeicherkapazität (42) des Energiespeichers zu ermitteln, die gemäß der Leistungsvorhersage (43) nicht von dem Energiesystem innerhalb des Zeitbereichs (12) verwendet wird, und die ermittelte Teilspeicherkapazität (42) für eine bezüglich des Energiesystems externe Verwendung bereitzustellen, wobei die Teilspeicherkapazität (42) eine Ladespeicherkapazität **SOC₊** und eine Entladespeicherkapazität **SOC_** umfasst, wobei die Ladespeicherkapazität **SOC₊** für ein externes Beladen des Energiespeichers verwendet wird, und die Entladespeicherkapazität **SOC_** für ein externes Entladen des Energiespeichers verwendet wird, und die Ladespeicherkapazität **SOC₊** durch **SOC₊ = 1 - SOCₘₐₓ** ermittelt wird, wobei **SOCₘₐₓ** den maximalen Ladezustand des Energiespeichers innerhalb des Zeitbereiches (12) kennzeichnet, und die Entladespeicherkapazität **SOC_** durch **SOC_ = 1 - SOCₘᵢₙ** ermittelt wird, wobei **SOCₘᵢₙ** den minimalen Ladezustand des Energiespeichers innerhalb des Zeitbereiches (12) **kennzeichnet, dadurch** gekennzeichnet, dass die externe Verwendung des Energiespeichers derart erfolgt, dass der bezüglich des Zeitbereiches (12) finale Ladezustand (2) des Energiespeichers gleich dem bezüglich des Zeitbereiches (12) initialen Ladezustandes (1) ist.

## Claims

1. Energy management method for an energy system, wherein a power prediction (43) for use of an energy storage unit of the energy system for a time range (12) is calculated, wherein, on the basis of the calculated power prediction (43), at least one externally usable partial storage capacity (42) of the energy storage unit is determined, which partial storage capacity, according to the power prediction (43), is not used by the energy system within the time range (12), the determined partial storage capacity (42) being provided for use external to the energy system, wherein the partial storage capacity (42) comprises a charge storage capacity **SOC₊** and a discharge storage capacity **SOC_,** wherein the charge storage capacity **SOC₊** is used for externally charging the energy storage unit, and the discharge storage capacity **SOC₋** is used for externally discharging the energy storage unit, and the charge storage capacity **SOC₊** is determined by **SOC₊ = 1 - SOCₘₐₓ,** wherein **SOCₘₐₓ** indicates the maximum state of charge of the energy storage unit within the time range (12), and the discharge storage capacity **SOC₋** is determined by **SOC_ = 1 - SOCₘᵢₙ**, wherein **SOCₘᵢₙ** indicates the minimum state of charge of the energy storage unit within the time range (12); **characterized in that** the external use of the energy storage unit is such that the final state of charge (2) of the energy storage unit with respect to the time range (12) is equal to the initial state of charge (1) with respect to the time range (12).

2. Energy management method according to Claim 1, **characterized in that** the charge storage capacity **SOC₊** and the discharge storage capacity **SOC₋** are determined depending on the initial state of charge (1) of the energy storage unit with respect to the time range (12).

3. Energy management method according to any one of the preceding claims, **characterized in that** the external use of the energy storage unit is such that the state of charge within the time range (12) is either below or above the initial and final states of charge (1, 2) with respect to the time range (12).

4. Energy management method according to any one of the preceding claims, **characterized in that** the external use of the energy storage unit is such that a maximum number of cycles of the energy storage unit with respect to the time range (12) is not exceeded.

5. Energy management method according to any one of the preceding claims, **characterized in that** the time range (12) is determined by means of the power prediction (43), wherein the determination is made under the condition that the energy storage unit is not used by the energy system within the time range (12).

6. Energy management method according to any one of the preceding claims, **characterized in that** the partial storage capacity (42) is submitted to a local energy market platform in the form of a storage offer for external use by further energy systems.

7. Energy management method according to Claim 6, **characterized in that** the external use, in particular with regard to the charging power and discharging power of the energy storage unit, is determined and specified by the local energy market platform within the time range (12).

8. Energy management system for an energy system, which is designed to calculate a power prediction (43) for use of an energy storage unit of the energy system for a time range (12), wherein the energy management system is designed, on the basis of the calculated power prediction (43), to determine at least one externally usable partial storage capacity (42) of the energy storage unit, which partial storage capacity, according to the power prediction (43), is not used by the energy system within the time range (12), the determined partial storage capacity (42) is provided for use external to the energy system, wherein the partial storage capacity (42) comprises a charge storage capacity **SOC₊** and a discharge storage capacity **SOC_,** wherein the charge storage capacity **SOC₊** is used for externally charging the energy storage unit, and the discharge storage capacity **SOC₋** is used for externally discharging the energy storage unit, and the charge storage capacity **SOC₊** is determined by **SOC₊** = **1 - SOCₘₐₓ,** wherein **SOCₘₐₓ** indicates the maximum state of charge of the energy storage unit within the time range (12), and the discharge storage capacity **SOC₋** is determined by **SOC_** = **1** - **SOCₘᵢₙ,** wherein **SOCₘᵢₙ** indicates the minimum state of charge of the energy storage unit within the time range (12), **characterized in that** the external use of the energy storage unit is such that the final state of charge (2) of the energy storage unit with respect to the time range (12) is equal to the initial state of charge (1) with respect to the time range (12).

## Revendications

1. Procédé de gestion d'énergie pour un système d'énergie, dans lequel on calcule une prédiction (43) de puissance pour une utilisation d'un accumulateur d'énergie du système d'énergie pendant un laps de temps (12), dans lequel, sur la base de la prédiction (43) de puissance calculée, on détermine au moins une capacité (42) d'accumulation partielle pouvant être utilisée à l'extérieur de l'accumulateur d'énergie, qui, suivant la prédiction (43) de puissance, n'est pas utilisée par le système d'énergie dans le laps de temps (12), dans lequel on met la capacité (42) d'accumulation partielle déterminée à disposition d'une utilisation extérieure relativement au système d'énergie,
dans lequel la capacité (42) d'accumulation partielle comprend une capacité **SOC₊** d'accumulation de charge et une capacité **SOC-** d'accumulation de décharge, dans lequel on utilise la capacité **SOC₊** d'accumulation de charge pour une charge extérieure de l'accumulateur d'énergie et on utilise la capacité **SOC-** d'accumulation de décharge pour une décharge extérieure de l'accumulateur d'énergie et on détermine la capacité **SOC₊** d'accumulation de charge par **SOC+ = 1 - SOCₘₐₓ,** dans lequel **SOCₘₐₓ** caractérise l'état de charge maximum de l'accumulateur d'énergie dans le laps de temps (12) et on détermine la capacité **SOC-** d'accumulation de décharge par **SOC- = 1** - **SOCₘᵢₙ,** dans lequel **SOCₘᵢₙ** caractérise l'état de charge minimum de l'accumulateur d'énergie dans le laps de temps (12), **caractérisé en ce que** l'utilisation extérieure de l'accumulateur d'énergie s'effectue de manière à ce que l'état (2) de charge final rapporté au laps de temps (12) de l'accumulateur d'énergie soit égal à l'état (1) de charge initial rapporté au laps de temps (12).

2. Procédé de gestion d'énergie suivant la revendication 1, **caractérisé en ce que** l'on fixe la capacité **SOC₊** d'accumulation de charge à la capacité **SOC-** d'accumulation de décharge en fonction de l'état (1) de charge initial rapporté au laps de temps (12) de l'accumulateur d'énergie.

3. Procédé de gestion d'énergie suivant l'une des revendications précédentes, **caractérisé en ce que** l'utilisation extérieure de l'accumulateur d'énergie s'effectue de manière à ce que l'état de charge dans le laps de temps (12) soit en-dessous ou au-dessus de l'état (1, 2) de charge initial et final rapporté au laps de temps (12).

4. Procédé de gestion d'énergie suivant l'une des revendications précédentes, **caractérisé en ce que** l'utilisation extérieure de l'accumulateur d'énergie s'effectue de manière à ce qu'un nombre de cycles maximum rapporté au laps de temps (12) de l'accumulateur d'énergie ne soit pas dépassé.

5. Procédé de gestion d'énergie suivant l'une des revendications précédentes, **caractérisé en ce que** l'on détermine le laps de temps (12) au moyen de la prédiction (43) de puissance, dans lequel la détermination s'effectue à la condition que l'accumulateur d'énergie ne soit pas utilisé par le système d'énergie dans le laps de temps (12) .

6. Procédé de gestion d'énergie suivant l'une des revendications précédentes, **caractérisé en ce que** l'on transmet à une plateforme locale de marché d'énergie la capacité (42) d'accumulation partielle sous la forme d'une offre d'accumulation pour l'utilisation extérieure par d'autres systèmes d'énergie.

7. Procédé de gestion d'énergie suivant la revendication 6, **caractérisé en ce que** l'on détermine et fixe, par la plateforme locale de marché d'énergie dans le laps de temps (12), l'utilisation extérieure, en particulier rapportée à la puissance de charge et à la puissance de décharge de l'accumulateur d'énergie.

8. Système de gestion d'énergie pour un système d'énergie, qui est conformé pour calculer une prédiction (43) de puissance pour une utilisation d'un accumulateur d'énergie du système d'énergie pendant un laps de temps (12), dans lequel le système de gestion d'énergie est constitué pour, sur la base de la prédiction (43) de puissance calculée, déterminer au moins une capacité (42) d'accumulation partielle utilisable à l'extérieur de l'accumulateur d'énergie, qui, suivant la prédiction (43) de puissance, n'est pas utilisée par le système d'énergie dans le laps de temps (12) pour mettre la capacité (42) d'accumulation partielle déterminée à disposition d'une utilisation extérieure rapportée au système d'énergie,
dans lequel la capacité (42) d'accumulation partielle comprend une capacité **SOC₊** d'accumulation de charge et une capacité **SOC-** d'accumulation de décharge, dans lequel on utilise la capacité **SOC₊** d'accumulation de charge pour une charge extérieure de l'accumulateur d'énergie et on utilise la capacité **SOC-** d'accumulation de décharge pour une décharge extérieure de l'accumulateur d'énergie et on détermine la capacité **SOC₊** d'accumulation de charge par **SOC₊ = 1 - SOCₘₐₓ,** dans lequel **SOCₘₐₓ** caractérise l'état de charge maximum de l'accumulateur d'énergie dans le laps de temps (12) et on détermine la capacité **SOC-** d'accumulation de décharge par **SOC- = 1 - SOCₘᵢₙ,** dans lequel **SOCₘᵢₙ** caractérise l'état de charge minimum de l'accumulateur d'énergie dans le laps de temps (12), **caractérisé en ce que** l'utilisation extérieure d'accumulateur d'énergie s'effectue de manière à ce que l'état (2) de charge final rapporté au laps de temps (12) de l'accumulateur d'énergie soit égal à l'état (1) de charge initial rapporté au laps de temps (12).
